# EUROPÄISCHE PATENTANMELDUNG

(11) **EP 2 103 503 A1**
(43) Veröffentlichungstag der Anmeldung: **23.09.2009**
(21) Anmeldenummer: 08102763.3
(22) Anmeldetag: 19.03.2008
(51) Int. Cl.: B62D 33/04

(54) **Kofferaufbau, Kofferbauelement und Verfahren zum Herstellen eines Kofferaufbaus für ein Fahrzeug**

(71) Anmelder: Schmitz Cargobull AG, 48341 Altenberge (DE)
(72) Erfinder: Schmitz, Peter, Dipl.-Ing., 48341 Altenberge (DE)
(74) Vertreter: Cohausz & Florack

(57) **Zusammenfassung**

Die Erfindung betrifft einen Kofferaufbau für ein Fahrzeug, insbesondere einen Lastkraftwagen W, Auflieger oder Anhänger. Eine einfache und praxisgerechte Herstellung eines solchen Kofferaufbaus wird erfindungsgemäß dadurch erreicht, dass die Seitenwände 4,5 und das Dach 6 gemeinsam aus mindestens zwei vorgefertigten Kofferbauelementen 10 gebildet sind, die jeweils einen ersten der ersten Seitenwand 4 zugeordneten Seitenwandabschnitt 12, einen fest mit dem ersten Seitenwandabschnitt 12 verbundenen, dem Dach 6 des Kofferaufbaus 3 zugeordneten Dachabschnitt 13 und einen ebenfalls fest mit dem Dachabschnitt 13 verbundenen, der zweiten Seitenwand 5 zugeordneten zweiten Seitenwandabschnitt 14 aufweisen, und dass zwischen dem Dachabschnitt 13 und dem jeweiligen an ihn angeschlossenen Seitenwandabschnitt 12,14 jeweils ein Übergangsabschnitt U1,U2 ausgebildet ist, in dem der betreffende Seitenwandabschnitt 12,14 beim Fertigumformen des jeweiligen Kofferbauteils 10 um jeweils eine Schwenkachse S1,S2 aus einer Ausgangsstellung in seine gegenüber dem Dachabschnitt 13 endgültige Stellung geschwenkt worden ist.

## Beschreibung

Die Erfindung betrifft einen Kofferaufbau für ein Fahrzeug, insbesondere einen Lastkraftwagen, Auflieger oder Anhänger, mit zwei Seitenwänden und einem von den Seitenwänden getragenen Dach. Darüber hinaus betrifft die Erfindung ein Element zum Bau eines solchen Kofferaufbaus und ein Verfahren zur Herstellung eines Kofferaufbaus.

Im Fall, dass die erfindungsgemäßen Kofferaufbauten für ein Kraftfahrzeug, wie beispielsweise einen leichten oder mittelschweren Lastkraftwagen, bestimmt sind, werden diese Kofferaufbauten in der Regel getrennt vom Führerhaus auf das Fahrgestell des Fahrzeuges aufgesetzt. Genauso lassen sich erfindungsgemäße Kofferaufbauten jedoch auch auf Anhängern oder Aufliegern aufsetzen, die von einer Zugmaschine bewegt werden.

Typischerweise werden Kofferaufbauten aus einzelnen getrennt voneinander vorgefertigten plattenförmigen Paneelen zusammengesetzt, die die Seitenwände und das Dach des Kofferaufbaus bilden. Die Verbindung zwischen den Seitenwandpaneelen und dem Dachpaneel wird bei diesen Aufbauten in der Regel durch Rahmenprofile hergestellt (EP 0 307 602 A1). Diese Rahmenprofile dienen nicht nur als Verbindungselemente, sondern stabilisieren auch die Form der Seitenwände und nehmen die Last des Dachs auf.

Der Vorteil dieser bekannten Kofferkonstruktionen besteht in ihrer hohen Formsteifigkeit und großen Belastbarkeit. Dazu müssen allerdings eine aufwändige und zeitintensive Montage sowie ein hohes Gewicht in Kauf genommen werden.

Weiterhin sind Aufbauten bekannt, bei denen die aus Metallblechen vorgefertigte Wand- und Dachpaneele mittels Profilschienen miteinander verbunden sind
(DD 221 703 A1). Auch diese Aufbauten weisen ein vergleichsweise hohes Gewicht auf und lassen sich nur mit großem Aufwand zusammensetzen. Hinzu kommt, dass sich derartige Kofferaufbauten insbesondere dann, wenn die Wand- und Dachpaneele zur Gewichtsminimierung aus Aluminiumwerkstoff oder vergleichbar leichten Werkstoffen hergestellt sind, nur zu hohen Kosten fertigen lassen.

Um den mit der Herstellung der konventionell gestalteten Kofferaufbauten verbundenen Aufwand zu mindern, ist in der WO 00/18637 vorgeschlagen worden, für die Herstellung eines Kofferaufbaus ein im Wesentlichen aus thermoplastischem Material bestehendes Flachteil zu verwenden, das nach Art eines Sandwichs mehrschichtig aufgebaut ist und einen Stützkern aufweist, auf den beidseitig eine Deckschicht aufgebracht ist. Die Deckschichten bilden auf diese Weise eine Innen- und eine Außenschale, die den zwischen ihnen vorhandenen, die eigentliche Festigkeit des Sandwichs gewährleistenden Stützkern schützen. Durch den mehrschaligen Aufbau der Wände und des Dachs können die Materialien der Deckschicht und des Stützkerns jeweils hinsichtlich ihrer jeweiligen Funktion gewählt werden, ohne dabei Rücksicht auf die Funktion nehmen zu müssen, die den jeweils anderen Elementen zugeordnet sind. So kann das Material des Stützkerns mit Blick auf eine optimale Festigkeit
und ein geringes Gewicht ausgewählt werden, während bei der Auswahl des Materials der Deckschichten der Schwerpunkt beispielsweise darauf gerichtet wird, dass sie Stöße abfangen können, zu denen es beim Beladen des von dem Kofferaufbau umgebenen Innenraums in der Praxis unvermeidbar kommt.

Die Fläche des gemäß dem aus der WO 00/18637 bekannten Verfahrens verarbeiteten Flachteils entspricht zumindest zwei aneinander grenzenden Umfangsseiten des Kofferaufbaus. Reicht die Breite der jeweils zur Verfügung stehenden Sandwichplatten nicht aus, kann das Flachteil aus mehreren Platten zusammengesetzt werden. Diese werden dann so miteinander verschweißt, dass das Flachteil insgesamt eine ebene, im Wesentlichen nahtfreie Oberfläche besitzt.

Ein solches Flachteil wird gemäß dem aus der WO 00/18637 bekannten Verfahren dann an etwa linienförmigen Übergangsbereichen entlang der Kantenbegrenzungen der aneinander grenzenden, umlaufenden Seitenwände des Kofferaufbaus erwärmt. Anschließend werden die Seitenwände dort abgekantet, so dass ein Dachabschnitt mit davon abstehenden Seitenwänden erhalten wird. Auf diese Weise soll sich ein Kofferaufbau herstellen, dessen in fertiger Relativposition zueinander ausgerichteten Seiten- und Dachteile einstückig miteinander verbunden sind.

Der wesentliche Vorteil der voranstehend beschriebenen bekannten Vorgehensweise bei der Herstellung eines Kofferaufbaus soll darin bestehen, dass die Montagearbeit darauf beschränkt ist, ein entsprechend dimensioniertes Sandwich-Flachteil unter Wärmeeinfluss abzukanten, so dass danach der wesentliche Teil des Kofferaufbaus als ein Stück zur Verfügung steht und ohne weiteres auf die jeweilige Tragkonstruktion des Fahrzeugs aufgesetzt werden kann. Die für die Erzeugung eines Kofferaufbaus benötigte Fertigungszeit soll so auf einen Bruchteil der Zeit begrenzt werden können, die für die Herstellung eines in der voranstehend erläuterten Weise konventionell hergestellten Aufbaus benötigt wird.

Trotz der offensichtlich bestehenden Vorteile hat sich das in der WO 00/18637 beschriebene Verfahren nicht durchgesetzt, weil sich in der Praxis die Verformung des Flächenelements zu dem Kofferaufbau als schwierig erwiesen hat.

Vor diesem Hintergrund lag der Erfindung die Aufgabe zu Grunde, einen Kofferaufbau zu schaffen, der sich unter praxisgerechten, den Anforderungen von modernen Fertigungsverfahren gerecht werdenden Bedingungen zu geringen Kosten und in minimierten Fertigungszeiten herstellen lässt. Darüber hinaus sollten ein für die Herstellung eines solchen Kofferaufbaus besonders geeignetes Kofferbauelement und ein Verfahren zur Herstellung eines Kofferaufbaus angegeben werden, mit dem sich Kofferaufbauten der in Rede stehenden Art schnell und kostengünstig herstellen lassen.

In Bezug auf den Kofferaufbau ist diese Aufgabe erfindungsgemäß dadurch gelöst worden, dass ein solcher Kofferaufbau nach Maßgabe der in Anspruch 1 angegebenen Lehre ausgebildet ist. Vorteilhafte Ausgestaltungen des erfindungsgemäßen Kofferaufbaus sind in den auf Anspruch 1 rückbezogenen Ansprüchen genannt.

Ein die voranstehend diesbezüglich genannte Aufgabe lösendes Kofferbauelement ist erfindungsgemäß durch die in Anspruch 21 angegebenen Merkmale gekennzeichnet.

Die Lösung der oben in Bezug auf das Herstellverfahren genannten Aufgabe besteht erfindungsgemäß schließlich darin, dass bei der Herstellung eines Kofferaufbaus für ein Fahrzeug die in Anspruch 22 angegebenen Maßnahmen absolviert werden. Vorteilhafte Ausgestaltungen des erfindungsgemäßen Verfahrens sind in den auf Anspruch 22 rückbezogenen Ansprüchen angegeben.

Der Erfindung liegt der Gedanke zu Grunde, den Kofferaufbau eines Fahrzeugs aus mehreren, d. h. mindestens zwei, vorteilhafterweise jedoch einer größeren Zahl von Bauelementen zusammenzusetzen, die auf einfache Weise in einem industriellen, zeitoptimierten Produktionsprozess verarbeitet werden können und die sich einfach verformen und durch eine ebenso einfache Fügeoperation miteinander verbinden lassen.

Zu diesem Zweck werden gemäß der Erfindung vorgefertigte Kofferbauelemente zur Verfügung gestellt, die im Anlieferungszustand jeweils einen dem Dach des Kofferaufbaus zugeordneten Dachabschnitt und zwei Seitenwandabschnitte aufweisen, die seitlich an den Dachabschnitt angeschlossen sind. Die so angelieferten Kofferbauelemente weisen eine Grundform auf, in der sie sich nicht nur platzsparend transportieren und lagern lassen, sondern in der sie sich auch noch besonders einfach in den automatischen Fertigungsprozess einspeisen lassen.

Dazu weisen die erfindungsgemäß verarbeiteten Kofferbauelemente in ihrem Anlieferungszustand, d. h. vor ihrer für die Erzeugung der Raumform des Kofferaufbaus erforderlichen Umformung, bevorzugt eine flache, langgestreckte Form auf, in der die Seitenwandabschnitte und der Dachabschnitt entlang einer gemeinsamen angeordneten Längsachse ausgerichtet sind.

Erfindungsgemäß werden bei den derart angelieferten Kofferbauelementen durch eine geeignete Umformoperation die Seitenwandabschnitte durch Verschwenken um eine zwischen dem jeweiligen Seitenwandabschnitt und dem Dachabschnitt ausgebildete Schwenkachse in eine in Bezug auf den Dachabschnitt fertige Relativposition gebracht.

Diese Fertigformung der Kofferbauelemente kann gemäß einer ersten Variante der Erfindung für alle jeweils vorhandenen Kofferbauelemente gemeinsam erfolgen, nachdem die einzelnen Kofferbauelemente im unverformten Anlieferungszustand zu einem Flächenelement zusammengesetzt worden sind.

Gemäß einer zweiten Variante der Erfindung werden die Kofferbauelemente dagegen zunächst separat, also jedes für sich, fertig geformt und dann im fertig geformten Zustand unter Beibehaltung ihrer fertigen Gestalt zu dem Kofferaufbau zusammengesetzt.

Unabhängig davon, ob die Verformung der einzelnen Kofferbauelemente vor oder nach dem Arbeitsschritt "Zusammensetzen" erfolgt, wird der aus ihnen gebildete Kofferaufbau abschließend als Ganzes auf die Bodenstruktur des Fahrzeugs aufgesetzt und mit ihr fest verbunden.

Dementsprechend zeichnet sich ein erfindungsgemäßer Kofferaufbau dadurch aus, dass die Seitenwände und das Dach gemeinsam aus mindestens zwei vorgefertigten Kofferbauelementen gebildet sind, die jeweils einen ersten der ersten Seitenwand zugeordneten Seitenwandabschnitt, einen fest mit dem ersten Seitenwandabschnitt verbundenen, dem Dach zugeordneten Dachabschnitt und einen ebenfalls fest mit dem Dachabschnitt verbundenen, der zweiten Seitenwand zugeordneten zweiten Seitenwandabschnitt aufweisen. Zwischen dem Dachabschnitt und dem jeweiligen an ihn angeschlossenen Seitenwandabschnitt ist jeweils ein Übergangsabschnitt ausgebildet, in dem der betreffende Seitenwandabschnitt beim Fertigformen des jeweiligen Kofferbauteils um jeweils eine Schwenkachse aus einer Ausgangsstellung in seine gegenüber dem Dachabschnitt endgültige Stellung geschwenkt worden ist.

Für die Fertigung eines erfindungsgemäßen Kofferaufbaus ist es somit nur noch erforderlich, die vorgefertigten Kofferbauteile in ihre für die Zusammenstellung des Kofferaufbaus fertige Form zu bringen. Weitere formgebende Tätigkeiten sind für die Herstellung des Kofferaufbaus dann nicht mehr erforderlich.

"Vorgefertigt" oder "vorgeformt" bedeutet im Zusammenhang mit den erfindungsgemäßen Kofferbauteilen, dass an ihnen bereits dann alle für das insbesondere formschlüssig erfolgende Zusammenfügen und ihre weitere Funktion benötigten Formteile angeformt, ausgebildet oder befestigt sind, wenn sie angeliefert werden und noch nicht in die für den Zusammenbau des Kofferaufbaus erforderliche Form gebracht sind.

Erfindungsgemäß sind damit alle Arbeitsschritte, die nicht unmittelbar im Zusammenhang mit dem Zusammenbau des Kofferaufbaus stehen, in ein weit vor der Endmontage liegendes Stadium der Fertigung verlegt. Diese Verlagerung aller für die Bereitstellung der Funktion und Formgebung eines erfindungsgemäßen Kofferbauelements erforderlichen Herstell- und Fertigungsschritte führt dazu, dass die Verbindung der einzelnen Flächenelemente "Seitenwände" und "Dach" des Kofferaufbaus innerhalb kürzester Zeit hergestellt werden können und jeder aufwändige Montageschritt vermieden wird.

Ein weiterer Vorteil der erfindungsgemäßen Gestaltung eines Kofferaufbaus besteht dabei auch darin, dass die als vergleichbar kleine und leichte Einzelteile angelieferten Kofferbauelemente leicht gehandhabt werden können. Dies erlaubt es, an ihnen auf einfache Weise in einem maschinellen, hoch automatisierten Fertigungsablauf alle Vorarbeiten vorzunehmen, die erforderlich sind, um sie in den Zustand zu bringen, in dem sie zu dem Kofferaufbau zusammengesetzt werden.

Die im Stand der Technik nur in einer handwerklichen Fertigungsmethode durchführbaren Arbeitsschritte sind daher bei erfindungsgemäßer Konstruktion und Fertigungsweise eines Kofferaufbaus nicht mehr erforderlich. Stattdessen erlaubt es die Erfindung, unter optimaler Ausnutzung eines hohen Automatisierungsgrades einen erfindungsgemäßen Kofferaufbau in einer extrem reduzierten Herstellzeit fertig zu stellen.

Ein besonders unkomplizierter Zusammenbau der einzelnen Kofferbauelemente zu dem Kofferaufbau lässt sich dadurch erreichen, dass die Kofferbauelemente formschlüssig miteinander verbunden werden. Eine solche formschlüssige Verbindung stellt nicht nur den Halt der Bauteile untereinander sicher, sondern lässt sich auch als Hilfe für das Zusammenfügen der Kofferbauteile nutzen. So kann die formschlüssige Verbindung zwischen den einzelnen Bauteilen ohne weiteres so ausgelegt werden, dass die zu fügenden Teile im Zuge des Zusammenfügens ihre für das Fügen erforderliche räumliche Zuordnung "selbst finden" und beibehalten, bis ihre endgültige relative Position erreicht ist. Dazu sind beispielsweise Rastverbindungen geeignet, bei denen in Folge einer entsprechenden Relativbewegung der zu fügenden Bauteile die Verbindungspartner durch entsprechend ausgebildete Einführhilfen selbsttätig zu der jeweiligen Rastposition finden. Die formschlüssige Verbindung der jeweils einander zugeordneten Kofferbauelemente ist dabei bevorzugt so ausgelegt, dass sie nicht mehr zerstörungsfrei lösbar ist. Eine derart unlösbare Verbindung hat den Vorteil, dass durch sie eine hohe Formstabilität und der dauerhafte Zusammenhalt des Kofferaufbaus gewährleistet sind.

Im Rahmen der Erfindung ist es ohne weiteres möglich, die Kofferbauteile aus mehreren separat vorgefertigten Einzelteilen so zusammenzusetzen, dass sie bei Anlieferung an dem Ort, an dem der Kofferaufbau in der erfindungsgemäßen Weise gefertigt wird, bereits fest miteinander verbunden sind. Auf diese Weise lassen sich für die Seitenwandabschnitte und den Dachabschnitt Werkstoffe verwenden, die den dort im praktischen Einsatz jeweils auftretenden Belastungen optimal standhalten.

Gleichzeitig kann für die zwischen den Seitenwandabschnitten und dem Dachabschnitt vorhandenen Übergangsabschnitte ein Werkstoff verwendet werden, der sich nicht nur optimal verformen lässt, sondern auch den in diesem Bereich in der Praxis auftretenden dynamischen Belastungen besonders sicher gerecht wird. Zu diesem Zweck können die Übergangsabschnitte separat vorgefertigt und mit dem ihnen jeweils zugeordneten Seitenwandabschnitt sowie dem Dachabschnitt vor dem sie verformenden Umformvorgang fest verbunden werden.

Eine besonders einfache und kostensparende Fertigung ergibt sich allerdings dann, wenn die Seitenwandabschnitte und der Dachabschnitt einstückig miteinander verbunden sind. Die zwischen den Seitenwandabschnitten und dem Dachabschnitt vorhandenen Übergangsabschnitte sind in diesem Fall selbstverständlich ebenfalls einstückig Teil des jeweiligen Kofferbauteils.

Die einfache Umformung der Kofferbauelemente in ihre fertige Form kann dadurch unterstützt werden, dass im Bereich des Übergangsabschnitts ein Scharnier ausgebildet ist, dessen Schwenkachse die Schwenkachse darstellt, um die der jeweilige Seitenwandabschnitt geschwenkt worden ist. Ein solches Scharnier kann beispielsweise dadurch gebildet werden, dass ein Formelement, wie beispielsweise mindestens eine Kerbe, eine Ausdünnung oder ein Wulst, in den Übergangsabschnitt zwischen dem Dachabschnitt und dem jeweiligen Seitenwandabschnitt eingeformt wird, so dass die Verformung des Kofferbauteils im Bereich dieses Formelements leichter erfolgen kann als in den angrenzenden Bereichen.

Im Hinblick auf das Handling beim Zusammenbau besonders günstige Abmessungen der Kofferbauelemente ergeben sich, wenn die Kofferbauelemente in Längsrichtung des Kofferaufbaus gesehen hintereinander gesetzt sind. Diese Art des Zusammenbaus kommt auch dem Umstand entgegen, dass bei den weitaus meisten in der Praxis eingesetzten Kofferaufbauten die Beladung über eine in der in Fahrtrichtung hinten liegenden Rückwand vorgesehene Tür erfolgt. Genauso ist es jedoch auch möglich, die erfindungsgemäßen Kofferelemente in Breitenrichtung des Kofferaufbaus nebeneinander zu setzen. Dies kann beispielsweise dann angezeigt sein, wenn die Längsseite des Kofferaufbaus für eine Beladung frei gehalten werden soll.

Ein besonderer Vorteil des erfindungsgemäßen Kofferaufbaus besteht darin, dass sich für ihn Kofferbauelemente verwenden lassen, die einschalig ausgebildet sind. So hat sich gezeigt, dass bereits durch die Mehrteiligkeit eines erfindungsgemäßen Kofferaufbaus eine so hohe Eigensteifigkeit erreicht wird, dass die im Stand der Technik noch für erforderlich gehaltene, in der Praxis aufwändige und teure Sandwich-Bauweise der Seitenwände und des Dachs vermieden werden kann. Stattdessen erlaubt es die Erfindung, Kofferbauelemente zu verwenden, die einstückig aus einem einheitlichen Material gefertigt sind. Dies erweist sich nicht nur vorteilhaft im Hinblick auf die erfindungsgemäß durchgeführte Verformung, da sich aus einem einzigen Material bestehende Bauelemente einfacher verformen lassen als mehrlagige, sondern auch im Hinblick auf das Einsparpotenzial, das bei der Produktion eines erfindungsgemäßen Kofferaufbaus genutzt werden kann.

Die erfindungsgemäß bevorzugte einschalige Bauweise ermöglicht es darüber hinaus, für die Herstellung der Seitenwände und des Dachs des Kofferaufbaus thermoplastische Kunststoffe zu verwenden. Derartige Kunststoffe lassen sich besonders gut verformen. Darüber hinaus weisen sie nicht nur eine hohe Zähigkeit und eine damit einhergehende Unempfindlichkeit gegen schlagende Belastungen, denen Kofferaufbauten der in Rede stehenden Art im praktischen Einsatz ausgesetzt sind, sondern auch ein geringes Gewicht und gute Alterungsbeständigkeit auf.

"Einschalig" heißt in diesem Zusammenhang, dass die miteinander verbundenen Seitenwände und das Dach des Kofferaufbaus jeweils aus einem einzigen Material gebildet sind, also weder aus einem durch mindestens zwei fest miteinander verbundenen Materiallagen gebildeten Sandwich noch aus mehreren getrennt voneinander verbauten Materiallagen bestehen. Durch den erfindungsgemäß einschaligen Aufbau lassen sich besonders einfach und kostengünstig durchführbare Verfahren zur Verformung des Kunststoffs einsetzen. So erlaubt es die Erfindung, Kofferbauelemente zu verwenden, die einstückig aus einem einheitlichen Kunststoffmaterial gefertigt sind. Dies erweist sich nicht nur vorteilhaft im Hinblick auf die bei der Herstellung des erfindungsgemäßen Kofferaufbaus durchgeführten Verformungsschritte, da sich aus einem einzigen Material bestehende Bauelemente einfacher verformen lassen als mehrlagige, sondern auch im Hinblick auf das Einsparpotenzial, das bei der Produktion eines erfindungsgemäßen Kofferaufbaus genutzt werden kann.

Insbesondere lassen sich bei einer einschaligen Bauweise Kunststoffe verwenden, aus denen in einem kontinuierlich ablaufenden Produktionsprozess kostengünstig ein Kunststoffstrang extrudiert wird, von dem die Kofferbauelemente dann lediglich noch abgelängt werden müssen, um sie der Weiterverarbeitung zuzuführen.

Sowohl das Zusammenfügen der erfindungsgemäßen Kofferbauelemente zu einem Kofferaufbau als auch die Stabilität und der Gebrauchswert eines erfindungsgemäßen Kofferaufbaus können dadurch unterstützt werden, dass Profilelemente zum Aussteifen des Kofferaufbaus vorgesehen sind. Die vorteilhafte Wirkung solcher Profilelemente wirkt sich insbesondere dann aus, wenn die Kofferbauelemente einschalig ausgebildet sind.

Die Funktion der erfindungsgemäß eingesetzten Profilelemente muss dabei nicht auf die Aussteifung beschränkt bleiben. Vielmehr können die Profilelemente auch zum Verbinden der Kofferaufbauelemente genutzt werden. Ebenso können an den Profilelementen Formelemente, wie Öffnungen oder Vorsprünge ausgebildet sein, die zum Befestigen der auf dem jeweiligen Fahrzeug zu transportierenden Last verwendet werden können. Des Weiteren können diese Formelemente dazu dienen, Raumteiler oder ähnliche Anbauteile im Innenraum des Kofferaufbaus zu fixieren.

Diese Profilelemente werden bevorzugt auf dem Innenraum des Kofferaufbaus angeordnet, um eine möglichst glatte, einheitliche Erscheinung der Außenseite des Aufbaus zu ermöglichen.

Eine besonders einfache Montage der Profilelemente ist dann möglich, wenn die feste Verbindung zwischen den Profilelementen und den Kofferbauelementen durch Formschluss erfolgt.

Damit die erfindungsgemäß eingesetzten Profilelemente ihre aussteifende Funktion erfüllen können, sollten sie aus einem Werkstoff bestehen, der ausreichend hohe Festigkeiten gewährleistet. So können die Profilelemente beispielsweise aus einem Leichtmetallwerkstoff, wie Al oder einer Al-Legierung, hergestellt sein. Aus Al-Werkstoff gefertigte Profilelemente können bei minimiertem Gewicht ohne weiteres eine komplexe Formgebung besitzen, die auch bei einer extrem gewichtsreduzierten Gestaltung der Profile eine ausreichende Formsteifigkeit gewährleistet.

Denkbar ist es jedoch auch, die Profilelemente aus Stahlblech herzustellen. Aus Stahlblech gefertigte Profilelemente haben den Vorteil eines günstigen Materialpreises und hoher Festigkeiten, die den Festigkeiten von Al- oder anderen Leichtmetallwerkstoffen überlegen sind. Gleichzeitig stehen effektive Fertigungsverfahren zur Verfügung, die mit hoher Produktivität die Herstellung auch komplex geformter Stahlprofile aus Blechen ermöglichen. Besonders geeignet zur Herstellung der erfindungsgemäß eingesetzten Profilelemente sind Stahlbleche, die mit einem vor Korrosion schützenden metallischen Überzug auf Zn-, Al-oder Mg-Basis versehen sind.

Auch können die Profilelemente gemäß einer weiteren vorteilhaften Ausgestaltung der Erfindung dazu genutzt werden, die Kofferbauelemente fest miteinander zu verbinden.

Das jeweilige Profilelement kann jedoch nicht nur eine aussteifende oder verbindende Funktion übernehmen, sondern auch als Träger für bestimmte Funktionsteile, wie Dichtungen, Versorgungsleitungen oder dergleichen, dienen. So können die Kofferbauelemente als stets gleiche Standardbauteile ohne individuell unterschiedliche Formgebung hergestellt werden. Auf diese Weise lässt sich nicht nur die Herstellungszeit beim Zusammenbau des Kofferaufbaus einsparen, sondern es wird auch Montagefehlern vorgebeugt.

Das Zusammenfügen und die Verbindung der Kofferbauelemente miteinander kann bei einfacher und kostengünstiger Herstellung zusätzlich dadurch unterstützt werden, dass an den Kofferbauelementen bereits im Anlieferungszustand einstückig Formelemente zum formschlüssigen Verbinden mit jeweils einem korrespondierend geformten Verbindungspartner ausgebildet sind. Bei dem Verbindungspartner kann es sich um das jeweils angrenzend montierte Kofferbauelement oder eines der voranstehend erläuterten aussteifenden Profilelemente handeln.

Ein besonders sicherer Zusammenhalt der Kofferbauelemente eines erfindungsgemäßen Kofferaufbaus kann dadurch hergestellt werden, dass die Kofferbauelemente durch Stoffschluss miteinander verbunden sind.. Eine solche stoffschlüssige Verbindung kann insbesondere dadurch erfolgen, dass die Kofferbauelemente miteinander verklebt werden. Indem eine solche Verklebung mit einer formschlüssigen Verbindung kombiniert wird, lässt sich zudem problemlos die lagerichtige Zuordnung der Fügepartner auch während der Aushärtphase des Klebstoffs sichern. So hält die formschlüssige Verbindung die beiden miteinander zu verbindenden Elemente auch während des Aushärtens des Klebers bereits sicher in der vorgeschriebenen Position. Sämtliche Montagearbeiten können daher ungestört von der für das Aushärten des Klebers benötigten Zeit unterbrechungsfrei fortgesetzt werden.

Ebenso ist es denkbar, die Kofferbauelemente alleine oder zusätzlich zu einer form- oder stoffschlüssigen, durch Verkleben bewirkten Verbindung kraftschlüssig miteinander zu verbinden. Dies kann beispielsweise dadurch erfolgen, dass das eine Kofferbauelement durch Klemmung eines mit dem jeweils angrenzend an ihm positionierten Kofferbauelement verbunden wird. Die Klemmung kann dabei beispielsweise im Bereich einer in erster Linie durch Formschluss wirkenden Schnappverbindung zwischen den betreffenden Kofferbauelementen ausgeübt werden. Auch in diesem Fall stellt die formschlüssige Verbindung sicher, dass die Fügepartner während des Anziehens der für die kraftschlüssige Verbindung verwendeten Bauelemente in der für sie vorgesehenen Stellung verharren.

Den voranstehend zusammengefassten Vorteilen der einzelnen Verbindungsarten entsprechend lässt sich durch eine Kombination von form-, stoff- und kraftschlüssigen Verbindungen die dauerhaft feste Verbindung der Kofferbauelemente bei optimal einfacher Montage in besonders praxisgerechter Weise sicherstellen.

Der Schutz des vom erfindungsgemäßen Kofferaufbau umgebenen Laderaums gegen von außen eindringende Feuchtigkeit kann dadurch gewährleistet werden, dass zwischen den Kofferbauelementen jeweils mindestens eine Dichtung zum Abdichten des betreffenden Laderaums gegenüber der Umgebung angeordnet ist.

Wie bereits erwähnt, sind die Kofferbauelemente gemäß einer besonders bevorzugten Ausgestaltung der Erfindung aus Kunststoff gefertigt. Kunststoff hat nicht nur den Vorteil eines geringen Gewichts, sondern eignet sich in der Regel auch für eine einfache thermoplastische Verformung. Dabei haben praktische Versuche ergeben, dass die Gesamtkonstruktion eines erfindungsgemäßen Kofferaufbaus insbesondere dann, wenn seine Kofferbauelemente einschalig aus einem Kunststoff gefertigt sind, eine hohe Unempfindlichkeit gegen Stöße, Schläge und ähnliche in der Praxis beispielsweise beim Beladen eines Fahrzeugs auftretende Belastungen besitzt.

Im Fall der Verwendung eines thermoplastisch verformbaren Kunststoffs wird bei der erfindungsgemäßen Herstellung eines Kofferaufbaus vor dem Verschwenken der Seitenwandabschnitte der zwischen dem jeweiligen Seitenwandabschnitt und dem Dachabschnitt vorhandene Übergangsabschnitt auf eine Umformungstemperatur erwärmt, bei der dieser Übergangsabschnitt plastisch verformbar ist. Anschließend wird der Seitenwandabschnitt in seine fertige Relativposition zum Dachabschnitt verschwenkt. Nach der daraufhin erfolgenden Abkühlung des Übergangsabschnitts auf eine Temperatur, bei der er fest ist, behält der Seitenwandabschnitt dann seine nach dem Verschwenken erreichte Relativposition zum Dachabschnitt bei. Die derart in Form gebrachten Kofferbauelemente werden dann gegebenenfalls unter Zuhilfenahme der voranstehend erläuterten aussteifenden Profilelemente zu dem Kofferaufbau zusammengesetzt.

Die Eigensteifigkeit der Kofferbauelemente kann dadurch erhöht werden, dass die Kofferbauelemente aussteifende Formelemente, wie Sicken, großflächigere Vertiefungen, Absätze, Vorsprünge oder dergleichen, aufweisen. Solche Formelemente erlauben die Verwendung besonders dünner Materialien.

Die erste Variante des erfindungsgemäßen Verfahrens, bei der die Kofferbauelemente im Anlieferungszustand vor ihrer Verformung zu einem großen Flächenelement zusammengesetzt und dann gemeinsam zu dem Kofferaufbau fertig umgeformt werden, hat den Vorteil, dass die Kofferbauelemente im Anlieferungszustand eine besonders hohe Formhaltigkeit besitzen, so dass sie leicht und mit hoher Genauigkeit zusammengefügt werden können. Das anschließend erfolgende Verformen des aus den derart zusammengefügten Kofferbauelementen gebildeten großen Flächenelements ist dann besonders einfach, wenn es sich bei den Kofferbauelementen um einschalige Kunststoffbauteile handelt und ein ausreichend großer Raum zur Verfügung steht.

Die zweite Variante des erfindungsgemäßen Verfahrens, bei der die Kofferbauelemente zunächst in ihre Endform gebracht und im fertig verformten Zustand zu dem Kofferaufbau zusammengesetzt werden, kann dagegen auf eng begrenztem Raum durchgeführt werden. In diesem Fall muss lediglich noch dafür gesorgt werden, dass die einzelnen Kofferbauelemente beim Zusammenfügen so geführt werden, dass sie die einander zugeordneten Flächen zweier benachbart angeordneter Kofferbauelemente lagerichtig treffen.

Nachfolgend wird die Erfindung anhand einer ein Ausführungsbeispiel darstellenden Zeichnung näher erläutert. Es zeigen jeweils schematisch:

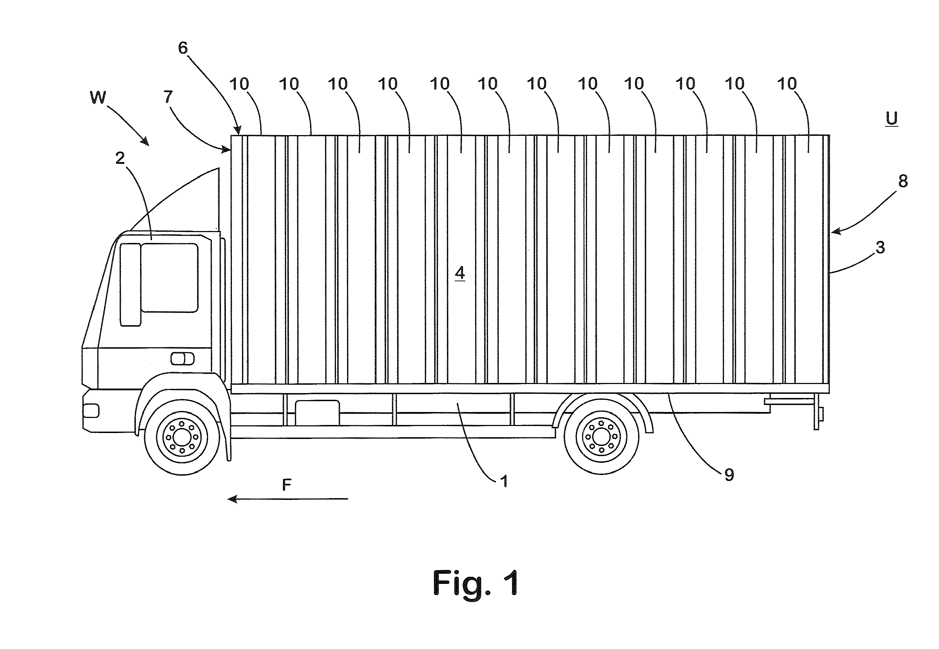

- Fig. 1: einen mittelschweren Lastkraftwagen in seitlicher Ansicht;

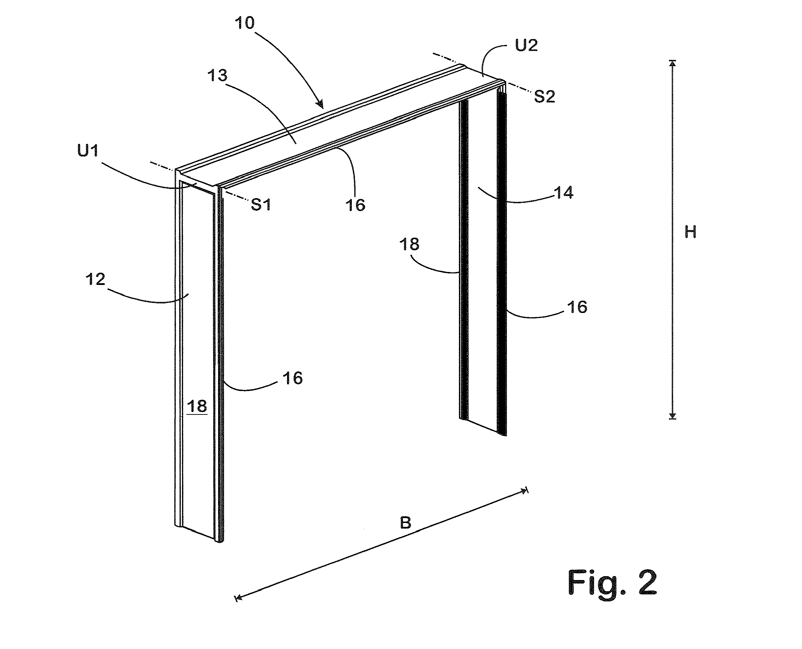

- Fig. 2: den Kofferaufbau des in Fig. 1 dargestellten Lastkraftwagens in einer perspektivischen Ansicht;

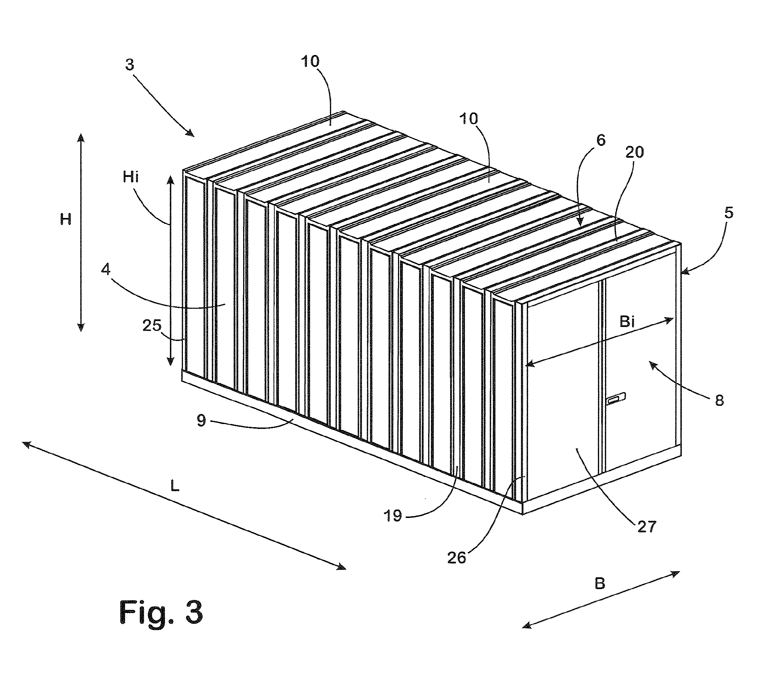

- Fig. 3: ein Kofferbauelement in perspektivischer Ansicht;
- Fig. 4: ein Kofferbauelement im vorgefertigten Anlieferungszustand in Draufsicht;
- Fig. 5: das Kofferbauelement gemäß Fig. 4 in seitlicher Ansicht;
- Fig. 6: das Kofferbauelement gemäß Fig. 4 im fertig umgeformten Zustand in seitlicher Ansicht;
- Fig. 7: ein aus mehreren im Anlieferungszustand befindlichen Kofferbauelementen zusammengesetztes Flächenelement;

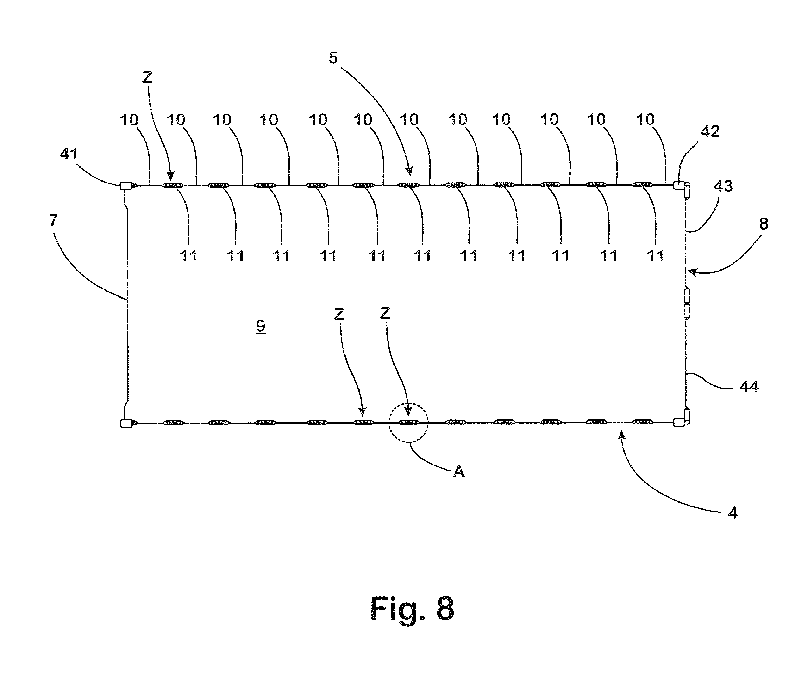

- Fig. 8: den Kofferaufbau gemäß Fig. 2 in einem horizontalen Längsschnitt;

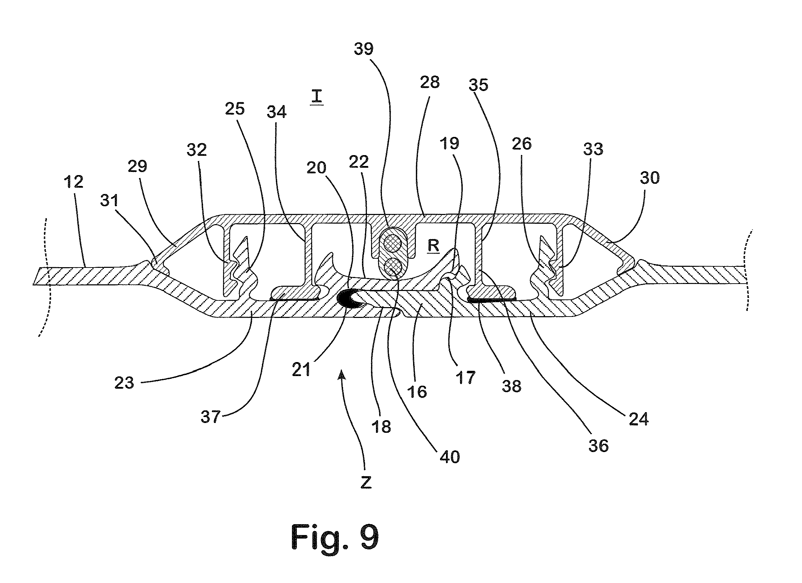

- Fig. 9: einen vergrößerten Ausschnitt A der Fig. 8.

Der Lastkraftwagen W der 7,5 t-Klasse weist ein konventionell aufgebautes Fahrgestell 1 auf, das in seinem in Fahrtrichtung F vorderen Teil in ebenfalls konventioneller Weise eine Führerkabine 2 mit einem darunter angeordneten, hier nicht sichtbaren Verbrennungsmotor trägt.

Getrennt von der Führerkabine 2 ist auf den rückwärtigen Teil des Fahrgestells 1 ein Kofferaufbau 3 aufgesetzt, der eine quaderförmige Grundform mit zwei gegenüberliegend angeordneten, längs der jeweiligen Längsseite des Lastkraftwagen W angeordneten Seitenwänden 4,5 und einem Dach 6 sowie einer der Führerkabine 2 zugeordnete Stirnwand 7 und eine Rückwand 8 aufweist. Dabei sitzt der Kofferaufbau 3 auf einem sich über seine gesamte Länge und Breite erstreckenden Boden 9, der wiederum auf dem Fahrgestell 1 befestigt ist.

Der Kofferaufbau 3 ist aus zwölf einzelnen Kofferbauelementen 10 zusammengesetzt. Zum Aussteifen des Kofferaufbaus 3 und Verbinden der zueinander jeweils benachbart angeordneten Kofferbauelemente 10 ist jeweils ein Profilelement 11 vorgesehen.

Die Kofferbauelemente 10 sind jeweils identisch gestaltet und weisen einen ersten Seitenwandabschnitt 12, einen an seiner Schmalseite damit einstückig verbundenen Dachabschnitt 13 sowie einen an die gegenüberliegende Schmalseite des Dachabschnitts 13 angeschlossenen zweiten Seitenwandabschnitt 4 auf.

Zwischen den Seitenwandabschnitten 12,14 und dem Dachabschnitt 13 ist jeweils ein Übergangsabschnitt U1,U2 ausgebildet, in dem der betreffende Seitenwandabschnitt 12 bzw. 14 um jeweils eine Schwenkachse S1,S2 in eine Position geschwenkt worden ist, in der er im Wesentlichen rechtwinklig zum Dachabschnitt 13 ausgerichtet ist. Auf diese Weise weist jedes Kofferbauelement 10 eine mit einer Türzarge vergleichbare Grundform auf. Die Höhe H der Seitenwandabschnitte 12,14 entspricht dabei der Höhe des Kofferaufbaus 3, während die Breite B des Dachabschnitts 13 gleich der Breite des Kofferaufbaus 3 ist.

Um ihre eigene Formstabilität zu erhöhen, sind in die Seitenwandabschnitte 12,14 und den Dachabschnitt 13 jeweils Formelemente in Form von großflächigen Einsenkungen 15 eingeformt, die sich im Wesentlichen über die gesamte Höhe H der Seitenwandabschnitte 12,14 bzw. die Breite B des Dachabschnitts 13 erstrecken.

An der einen dünnen, in Längsrichtung L des Kofferaufbaus 3 gerichteten Stirnfläche der Seitenwandabschnitte 12,14 und des Dachabschnitts 13 der Kofferbauelemente 10 sind Rastvorsprünge 16 angeformt, die jeweils mindestens eine Raste 17 tragen.

In die gegenüberliegenden schmalen Stirnflächen der Kofferaufbauten sind dagegen Aufnahmen 18 eingeformt, deren Form so an die Form der Rastvorsprünge 16 angepasst ist, dass beim Einführen der Rastvorsprünge 16 in die Aufnahmen 18 die Raste 17 der Rastvorsprünge 16 vorschlüssig und unlösbar mit einer entsprechenden Raste 19 der jeweiligen Aufnahme 18 verrastet. Zusätzlich ist im Bereich der Aufnahme 18 eine Ausnehmung 20 ausgebildet, in der bei fertig zusammengesetztem Kofferaufbau 3 eine Dichtung 21 liegt.

Der dem Innenraum I des Kofferaufbaus 3 zugeordnete, die Aufnahme 18 begrenzende Wandabschnitt weist auf seiner dem Innenraum I zugewandten Seite eine sich über die Höhe H des jeweiligen Seitenwandabschnitts 12,14 bzw. die Breite B des Dachabschnitts 13 erstreckende Einwölbung 22 auf.

Zusätzlich ist an die dem Innenraum I zugeordnete Seite der Kofferbauelemente 10 der die Einsenkung 15 seitlich begrenzenden Bereiche 23,24 der Seitenwandabschnitte 12,14 und des Dachabschnitts 13 jeweils ein in Richtung des Innenraums I vorstehender Rastvorsprung 25,26 ausgebildet, der widerhakenartige Vorsprünge trägt.

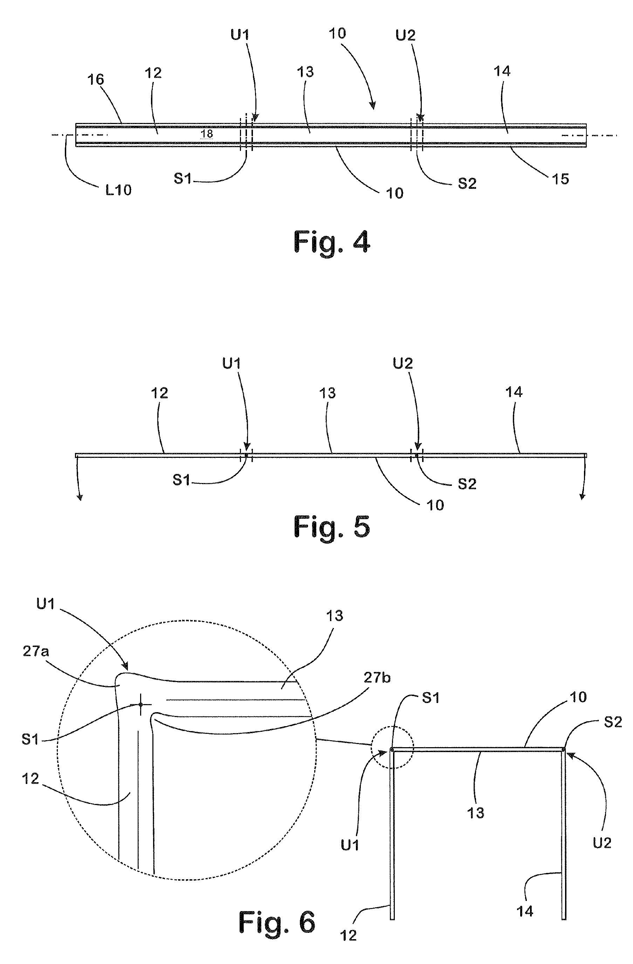

Im Anlieferungszustand (Figuren 4,5) weisen die einstückig aus einem thermoplastischen, hochstabilen Kunststoff einschalig gefertigten Kofferbauelemente 10 eine flache Gestalt auf, bei der die Seitenwandabschnitte 12,14 mit ihren Längsachsen L12,L14 und der Dachabschnitt 13 mit seiner Längsachse L13 so ausgerichtet sind, dass die Längsachsen L12, L13, L14 bei idealer Formgebung koaxial zueinander ausgerichtet sind und in einer Ebene liegen. Dabei sind in die Kofferbauelemente 10 bereits die aussteifenden Einsenkungen 15, die Rastvorsprünge 16, die Aufnahmen 18 und die Rastvorsprünge 25,26 sowie alle weiteren für die Funktion der Kofferbauelemente 10 benötigten Gestaltungsmerkmale angeformt.

Vor dem Umformen der Kofferbauelemente 10 in ihre montagefertige Endform werden sie in ihren Übergangsabschnitten U1,U2 mit Hilfe einer geeigneten, hier nicht gezeigten Erwärmungseinrichtung auf eine Umformtemperatur erwärmt, bei der der Kunststoff der Kofferbauelemente 10 zerstörungsfrei verformbar ist. Sobald diese Temperatur erreicht ist, werden die Seitenabschnitte 12,14 um die jeweilige Schwenkachse S1,S2 gegeneinander geschwenkt, bis sie jeweils in einem Winkel von 90° gegenüber dem Dachabschnitt 13 ausgerichtet sind (Fig. 6). In dieser Relativposition werden die Seitenabschnitte 12,14 und der Dachabschnitt 13 gehalten, bis die Übergangszonen U1,U2 wieder auf eine deutlich unterhalb der Umformtemperatur liegende Temperatur abgekühlt und der Kunststoff der Kofferbauelemente 10 nicht mehr verformbar ist. Die Position der Seitenabschnitte 12,14 relativ zum Dachabschnitt 13 ist dann fixiert.

Im Zuge der Umformung werden die Übergangszonen U1,U2 jeweils so verformt, dass eine Materialstauchung auf ihrer dem Innenraum I zugeordneten Innenseite genauso weitestgehend vermieden wird wie eine Materialstreckung im Bereich ihrer der Innenseite gegenüberliegenden Außenseite. Aus dem im Bereich der Übergangszonen 15,16 vorhandenen Kunststoffmaterial wird dazu mit Hilfe eines hier nicht dargestellten Formwerkzeugs ein nach außen gerichteter, im Wesentlichen achsparallel zur jeweiligen Schwenkachse S1,S2 ausgerichteter Wulst und eine in den nach innen gewandten Eckbereich eingeformte Ausnehmung gebildet.

Der Übersichtlichkeit halber ist in Fig. 6 in einem vergrößerten Ausschnitt in einer nicht maßstäblichen Weise nur die Ausbildung des Übergangsbereichs U1 mit dessen Wulst 27a und dessen Ausnehmung 27b dargestellt. Der jeweilige Wulst 27a der Übergangszonen U1,U2 nimmt das Material auf, das aufgrund der auf der Innen- und Außenseite der Übergangszonen U1,U2 jeweils unterschiedlichen Biegelängen während des Umformvorgangs verdrängt wird. Die Formgebung des Wulstes 27a ist dabei jeweils so gewählt, dass er eine Abrisskante für auf dem Dach 6 des Kofferaufbaus 1 anstehendes Wasser bildet. Sowohl der Wulst 27a als auch die Ausnehmung 27b sind dabei so geformt, dass eine Kerbwirkung weitestgehend vermieden wird.

Gemäß einer ersten Verfahrensvariante wird die benötigte Zahl von Kofferbauelementen 10 in der voranstehend erläuterten Weise jeweils einzeln getrennt voneinander in ihre fertig geformte, in Fig. 6 dargestellte Form gebracht und erst in diesem fertig umgeformten Zustand zu dem einschaligen Kofferaufbau 3 zusammengesetzt.

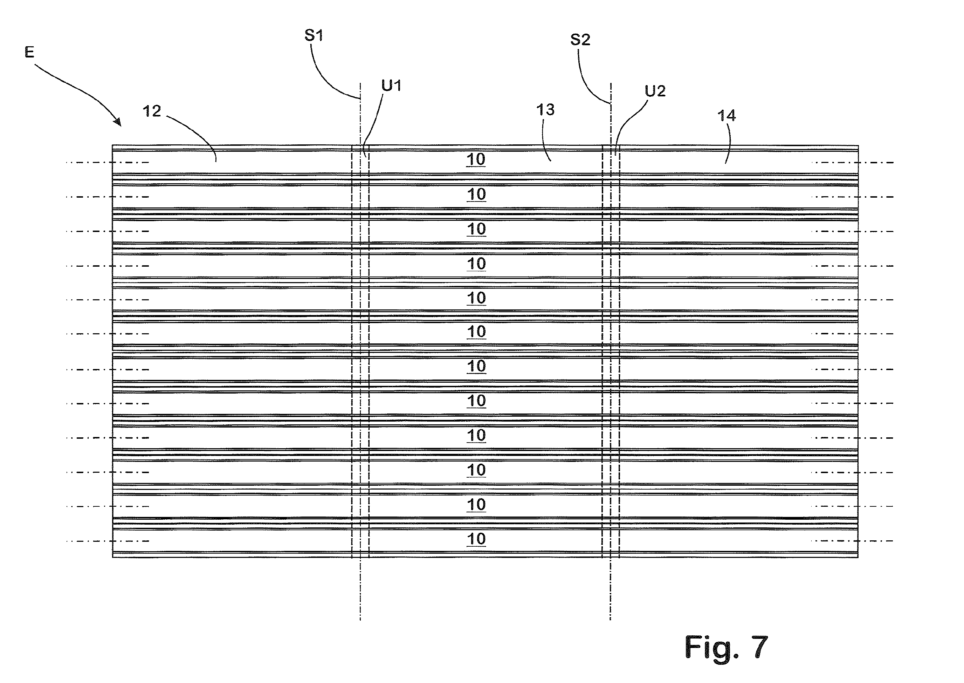

Gemäß einer zweiten Verfahrensvariante werden die benötigten Kofferbauelemente 10 zunächst im flachen, in den Figuren 4,5 gezeigten Anlieferungszustand zu einem Flächenelement E zusammengesetzt (Fig. 7) und dann gemeinsam in der voranstehend beschriebenen Weise in ihre fertige Form gebracht, in der sie den einschaligen Kofferaufbau 3 bilden.

Die zum Aussteifen des Kofferaufbaus 3 vorgesehenen Profilelemente 11 sind aus einem Aluminiumwerkstoff stranggepresst. Dabei sind Profilelemente 11 für die Aussteifung der Seitenwände 4,5 des Kofferaufbaus 3 vorgesehen, deren Länge bis auf ein für die Montage benötigtes Untermaß der Höhe Hi des von dem Kofferaufbau 3 umschlossenen Innenraums I entspricht. In gleicher Weise sind hier nicht dargestellte Profilelemente zum Aussteifen des Dachs 6 vorgesehen, deren Länge bis auf ein für die Montage benötigtes Untermaß der Breite Bi des Innenraums I entspricht. Die nachfolgend sich auf die hier gezeigten Profilelemente 11 beziehenden Erläuterungen gelten für die dem Dach zugeordneten, hier nicht dargestellten Profilelemente in identischer Weise.

Die Profilelemente 11 weisen jeweils einen sich über ihre jeweilige Länge erstreckenden ebenen Mittelabschnitt 28 auf. An den Mittelabschnitt 28 sind seitlich jeweils unter demselben Winkel von dem Mittelabschnitt 28 abgewinkelte Schenkelabschnitte 29,30 so angeschlossen, dass ihre dem Mittelabschnitt 28 zugewandten Flächen auch einander zugewandt sind. An ihren freien Längsrändern tragen die Schenkelabschnitte 29,30 jeweils einen Absatz, 31, an dem eine außenliegende Anlagefläche ausgebildet ist.

In den Bereichen, in denen der Mittelabschnitt 28 in den jeweiligen Schenkelabschnitt 29,30 übergeht, ist zusätzlich jeweils ein Rastvorsprung 32,33 an die Profilelemente 11 angeformt. Auch die Rastvorsprünge erstrecken sich über die jeweilige Länge der Profilelemente 11 und stehen im Wesentlichen senkrecht zum Mittelabschnitt 28 in den seitlich von den Schenkelabschnitten 29,30 begrenzten Raum R vor. An den einander zugewandten Flächen der Rastvorsprünge 32,33 sind widerhakenförmige Rasten ausgebildet.

Jeweils zur Mitte des Mittelabschnitts 28 hin gegenüber den Rastvorsprüngen 32,33 versetzt sind an den Mittelabschnitt 28 des Weiteren Leisten 34,35 angeformt, die sich ebenfalls über die jeweilige Länge der Profilelemente 11 erstrecken. Die Leisten 34,35 weisen jeweils einen Steg 36 auf, der an seinem freien Ende einen Fußabschnitt 37 trägt. An der vom Mittelabschnitt 28 abgewandten Seite weist der Fußabschnitt 37 jeweils eine Anlagefläche 38 auf. In die Anlagefläche 38 kann mindestens eine hier nicht gezeigte, sich über die jeweilige Länge der Profilelemente 11 erstreckende Rille eingeformt sein.

Schließlich ist auf seiner dem Raum R zugeordneten Seite an den Mittelabschnitt 28 eine kehlenartige Aufnahme 39 angeformt, die sich ebenfalls über die jeweilige Länge des Profilelements erstreckt. In die Aufnahme 39 kann beispielsweise eine Leitung 40 zur elektrischen Versorgung der Innenbeleuchtung des Kofferaufbaus 3 eingelegt sein.

Zur Montage eines Profilelements 11 auf der dem Innenraum I des Kofferaufbaus 3 zugeordneten Innenseite der Kofferbauelemente 10 werden die Anlageflächen 38 der Leisten 34,35 des Profilelements 11 mit einem geeigneten Klebstoff bestrichen. Anschließend wird das Profilelement 11 so positioniert, dass es die Fügezone Z überbrückt, in der zwei Kofferbauelemente 10 zusammengefügt sind. Anschließend wird das Profilelement 11 gegen die Kofferbauelemente 10 gedrückt. Die Position seiner Rastvorsprünge 32,33 ist dabei so an die Position der in der Fügezone Z vorhandenen Rastvorsprünge 25,26 der Kofferbauelemente 10 angepasst, dass jeweils ein Rastvorsprung 32,33 des Profilelements 11 einer der in der Fügezone vorhandenen Rasten 25,26 der Kofferbauelemente 10 zugeordnet ist und die Rasten der einander zugeordneten Rastvorsprünge 32,25 bzw. 33,26 bei fortgesetztem Andrücken des Profilelements 11 miteinander unlösbar verrasten.

Der Andrückvorgang wird fortgesetzt, bis die Anlageflächen 38 der Leisten 34,35 mit dem Klebstoff satt auf der dem Innenraum I zugeordneten Innenseite der Kofferbauelemente 10 sitzt. Gegebenenfalls überschüssiger Klebstoff wird von der in die Anlagefläche 38 eingeformte, hier nicht gezeigte Rille aufgenommen. Wenn diese Stellung erreicht ist, liegen auch die Schenkelabschnitte 29,30 mit der Anlagefläche ihrer Absätze 31 fest auf dem ihnen jeweils zugeordneten Kofferbauelement 10 auf.

Die durch die Rastvorsprünge 32,25 und 33,26 gebildete unlösbare formschlüssige Verbindung zwischen dem Profilelement 11 und den Kofferbauelementen 10 stellt sicher, dass bereits während des Abbindens der Kleber die relative Lage von Profilelement 11 und Kofferbauelementen 10 fixiert ist. Dementsprechend können die Montagearbeiten trotz der für das Abbinden des Klebers benötigten Zeit ohne Unterbrechung fortgesetzt werden.

Im fertig montierten Zustand ist die elektrische Leitung auf ihrer vom Mittelabschnitt 28 abgewandten Seite an der Einwölbung 22 abgestützt.

Die als separate Bauteil getrennten vorgefertigten Stirnwand 7 und Rückwand 8 weisen jeweils einen Rahmen 41,42 auf, von denen der Stirnwandrahmen 41 ein hier nicht sichtbares Stirnwandpaneel umgibt, während im Rückwandrahmen 42 die Türen 43,44 des Kofferaufbaus 3 gelagert sind.

Auf seiner dem zu ihm nächstbenachbart angeordneten Kofferbauelement 10 zugeordneten Seite weist der Stirnwandrahmen 41 hier ebenfalls nicht sichtbare Aufnahmen und Rastvorsprünge auf, die entsprechend der Aufnahme 18 und der Rastvorsprünge 25 der Kofferbauelemente 10 geformt ist. Dagegen sind an den Rückwandrahmen 42 der Rastvorsprünge 16,26 der Kofferbauelemente 10 entsprechende, hier ebenfalls nicht dargestellte Rastvorsprünge angeformt.

Beim Aufsetzen des Stirnwandrahmens 41 auf das jeweilige Kofferbauelement 10 verrastet der Stirnwandrahmen 41 dementsprechend genauso wie ein Kofferbauelement 10 formschlüssig und unlösbar mit dem Rastvorsprung 16, der von der dem Stirnwandrahmen 41 zugeordneten Seite des betreffenden Kofferbauelements 10 vorsteht. Genauso verrastet der Rückwandrahmen 42 mit dem ihm zugeordneten Kofferbauelement 10, wenn seine Rastvorsprünge in die korrespondierenden Aufnahmen 18 des betreffenden Kofferbauelements 10 eingeführt werden.

Der Stirnwandrahmen 41 und der Rückwandrahmen 42 lassen sich anschließend in der für die Kofferbauelemente 10 beschriebenen Weise zusätzlich mittels Profilelementen 11 mit dem ihnen jeweils zugeordneten Kofferbauelement 10 verbinden.

| **BEZUGSZEICHEN** | **GEGENSTAND** |
|---|---|
| 1 | Fahrgestell |
| 2 | Führerkabine |
| 3 | Kofferaufbau |
| 4, 5 | Seitenwände |
| 6 | Dach |
| 7 | Stirnwand |
| 8 | Rückwand |
| 9 | Boden |
| 10 | Kofferbauelemente |
| 11 | Profilelemente |
| 12,14 | Seitenwandabschnitt der Kofferbauelemente 10 |
| 13 | Dachabschnitt der Kofferbauelemente 10 |
| 15 | Einsenkungen (aussteifende Formelemente) |
| 16 | Rastvorsprünge |
| 17 | Raste der Rastvorsprünge 16 |
| 18 | Aufnahmen |
| 19 | Raste der Aufnahmen 18 |
| 20 | Ausnehmung der Aufnahmen 18 |
| 21 | Dichtung |
| 22 | Einwölbung |
| 23,24 | die Einsenkung 15 seitlich begrenzende Bereiche |
| 25,26 | Rastvorsprünge |
| 27a | Wulst |
| 27b | Ausnehmung |
| 28 | Mittelabschnitt der Profilelemente 11 |
| 29,30 | Schenkelabschnitte |
| 31 | Absatz der Schenkelabschnitte 29,30 |
| 32,33 | Rastvorsprünge der Profilelemente 11 |
| 34,35 | Leisten der Profilelemente 11 |
| 36 | Steg der Leisten 34,35 |
| 37 | Fußabschnitt der Leisten 34,35 |
| 38 | Anlagefläche der Fußabschnitte 37 |
| 39 | Aufnahme der Profilelemente 11 |
| 40 | Leitung zur elektrischen Versorgung |
| 41 | Stirnwandrahmen |
| 42 | Rückwandrahmen |
| 43,44 | Türen des Kofferaufbaus 3 |
| B | Breite des Dachabschnitts 13 |
| Bi | Breite des Innenraums I |
| E | Flächenelement |
| F | Fahrtrichtung |
| H | Höhe der Seitenwandabschnitte 12,14 |
| Hi | Höhe des Innenraums I |
| I | Innenraum des Kofferaufbaus 3 |
| L | Längsrichtung des Kofferaufbaus 3 |
| L12,L14 | Längsachse der Seitenwandabschnitte 12,14 |
| L13 | Längsachse des Dachabschnitts 13 |
| R | seitlich von den Schenkelabschnitten 29,30 begrenzter Raum |
| S1, S2 | Schwenkachse der Kofferbauelemente 10 |
| U1,U2 | Übergangsabschnitt der Kofferbauelemente 10 |
| W | Lastkraftwagen |
| Z | Fügezone, in der zwei Kofferbauelemente 10 zusammengefügt sind |

## Patentansprüche

1. Kofferaufbau für ein Fahrzeug, insbesondere einen Lastkraftwagen (W), Auflieger oder Anhänger, mit zwei Seitenwänden (4,5) und einem von den Seitenwänden (4,5) getragenen Dach (6),
**dadurch gekennzeichnet,**
- **dass** die Seitenwände (4,5) und das Dach (6) gemeinsam aus mindestens zwei vorgefertigten Kofferbauelementen (10) gebildet sind, die jeweils einen ersten der ersten Seitenwand (4) zugeordneten Seitenwandabschnitt (12), einen fest mit dem ersten Seitenwandabschnitt (12) verbundenen, dem Dach (6) des Kofferaufbaus (3) zugeordneten Dachabschnitt (13) und einen ebenfalls fest mit dem Dachabschnitt (13) verbundenen, der zweiten Seitenwand (5) zugeordneten zweiten Seitenwandabschnitt (14) aufweisen, und
- **dass** zwischen dem Dachabschnitt (13) und dem jeweiligen an ihn angeschlossenen Seitenwandabschnitt (12,14)jeweils ein Übergangsabschnitt (U1,U2) ausgebildet ist, in dem der betreffende Seitenwandabschnitt (12,14) beim Fertigumformen des jeweiligen Kofferbauteils (10) um jeweils eine Schwenkachse (S1,S2) aus einer Ausgangsstellung in seine gegenüber dem Dachabschnitt (13) endgültige Stellung geschwenkt worden ist.

2. Kofferaufbau nach Anspruch 1, **dadurch gekennzeichnet, dass** die Seitenwandabschnitte (12,14) und der Dachabschnitt (13) einstückig miteinander verbunden sind.

3. Kofferaufbau nach Anspruch 1, **dadurch gekennzeichnet, dass** die Übergangsabschnitte (U1,U2) separat vorgefertigt und mit dem ihnen jeweils zugeordneten Seitenwandabschnitt (12,14) sowie dem Dachabschnitt (13) vor dem Umformvorgang fest verbunden sind.

4. Kofferaufbau nach Anspruch 1 oder 2, **dadurch gekennzeichnet, dass** im Bereich des Übergangsabschnitts (U1,U2) ein Scharnier ausgebildet ist, dessen Schwenkachse die Schwenkachse (S1,S2) darstellt, um die der jeweilige Seitenwandabschnitt (12,14) geschwenkt worden ist.

5. Kofferaufbau nach einem der voranstehenden Ansprüche, **dadurch gekennzeichnet, dass** die Kofferbauelemente (10) durch Formschluss miteinander verbunden sind.

6. Kofferaufbau nach einem der voranstehenden Ansprüche, **dadurch gekennzeichnet, dass** die Kofferbauelemente (10) in Längsrichtung (L) des Kofferaufbaus (3) gesehen hintereinander gesetzt sind.

7. Kofferaufbau nach einem der voranstehenden Ansprüche, **dadurch gekennzeichnet, dass** die Kofferbauelemente (10) einschalig ausgebildet sind.

8. Kofferaufbau nach einem der voranstehenden Ansprüche, **dadurch**
**gekennzeichnet, dass** mindestens ein Profilelement (11) zum Aussteifen des Kofferaufbaus (3) vorgesehen ist.

9. Kofferaufbau nach Anspruch 8, **dadurch gekennzeichnet, dass** die Kofferbauelemente (10) mit Hilfe jeweils mindestens eines der Profilelemente (11) miteinander fest verbunden sind.

10. Kofferaufbau nach Anspruch 9, **dadurch**
**gekennzeichnet, dass** die feste Verbindung zwischen den Profilelementen (11) und den Kofferbauelementen (10) durch Formschluss erfolgt.

11. Kofferaufbau nach Anspruch 10, **dadurch gekennzeichnet, dass** an die Kofferbauelemente (10) einstückig Formelemente (16,18;25,26) zum formschlüssigen Verbinden mit jeweils einem korrespondierend geformten Verbindungspartner (18,16;32,33) angeformt sind.

12. Kofferaufbau nach einem der Ansprüche 8 bis 11,
**dadurch gekennzeichnet, dass**
mindestens eines der Profilelemente (11) eine Aufnahme (39) für ein an dem Profilelement (11) zu befestigendes Funktionsteil aufweist.

13. Kofferaufbau nach einem der voranstehenden Ansprüche, **dadurch gekennzeichnet, dass** die Kofferbauelemente (10) miteinander durch Stoffschluss verbunden sind.

14. Kofferaufbau nach Anspruch 13, **dadurch gekennzeichnet, dass** die Kofferbauelemente (10) miteinander verklebt sind.

15. Kofferaufbau nach einem der voranstehenden Ansprüche, **dadurch gekennzeichnet, dass** die Kofferbauelemente (10) kraftschlüssig miteinander verbunden sind.

16. Kofferaufbau nach einem der voranstehenden Ansprüche, **dadurch**
**gekennzeichnet, dass** zwischen den Kofferbauelementen (10) jeweils mindestens eine Dichtung (21) zum Abdichten des von dem Kofferaufbau (3) umgrenzten Laderaums gegenüber der Umgebung angeordnet ist.

17. Kofferaufbau nach einem der voranstehenden Ansprüche, **dadurch gekennzeichnet, dass** die Kofferbauelemente (10) aus Kunststoff gefertigt sind.

18. Kofferaufbau nach Anspruch 17, **dadurch gekennzeichnet, dass** der Kunststoff thermoplastisch verformbar ist.

19. Kofferaufbau nach einem der voranstehenden Ansprüche, **dadurch gekennzeichnet, dass** die Kofferbauelemente (10) aussteifende Formelemente (15) aufweisen.

20. Kofferaufbau nach einem der voranstehenden Ansprüche, **dadurch**
**gekennzeichnet, dass** die von den Seitenwandabschnitten (12,14) der Kofferbauelemente (10) gebildeten Seitenwände (4,5) sich in Längsrichtung (L) des Fahrzeugs (W) erstrecken.

21. Kofferbauelement zum Herstellen eines Kofferaufbaus (3) für ein Fahrzeug, insbesondere einen Lastkraftwagen (W), Auflieger oder Anhänger,
- mit einem einer ersten Seitenwand (4) des Kofferaufbaus (3) zugeordneten Seitenwandabschnitt (12),
- mit einem mit dem ersten Seitenwandabschnitt (12) fest verbundenen, einem Dach (6) des Kofferaufbaus (3) zugeordneten Dachabschnitt (13),
- mit einem ebenfalls fest mit dem Dachabschnitt (13) verbundenen, einer zweiten Seitenwand (5) des Kofferaufbaus (3) zugeordneten zweiten Seitenwandabschnitt (14),
- mit zwischen dem Dachabschnitt (13) und dem jeweiligen an ihn angeschlossenen Seitenwandabschnitt (12,14) jeweils vorhandenen Übergangsabschnitten (U1,U2), in denen der jeweilige Seitenwandabschnitt (12,14) um jeweils eine Schwenkachse (S1,S2) aus einer Ausgangsstellung in seine gegenüber dem Dachabschnitt (13) endgültige Stellung geschwenkt worden ist, und
- mit Formelementen (16,18) zum Verbinden mit mindestens einem weiteren Kofferbauelement (10),
- wobei die in Richtung der Seitenwände (4,5) des Kofferaufbaus (3) gemessene Länge des Kofferbauelements (10) einem Bruchteil der Gesamtlänge der Seitenwände (4,5) des Kofferaufbaus (3) entspricht.

22. Verfahren zum Herstellen eines auf einer Bodenstruktur aufgesetzten Kofferaufbaus (3) für ein Fahrzeug, insbesondere einen Lastkraftwagen (W), Auflieger oder Anhänger, der zwei Seitenwände (4,5) und ein von den Seitenwänden (4,5) getragenes Dach (6) aufweist, **gekennzeichnet**
**durch** folgende Arbeitsschritte:
a) Es werden vorgefertigte Kofferbauelemente (10) zur Verfügung gestellt, die jeweils einen Dachabschnitt (13) und zwei Seitenwandabschnitte (12,14) aufweisen, die jeweils seitlich an den Dachabschnitt (13) angeschlossen sind und deren Längsachsen (L12,L14) sich im Anlieferungszustand im Wesentlichen in derselben Ebene erstrecken wie die Längsachse (L13) des Dachabschnitts (13).
b) Die Seitenwandabschnitte (12,14) der Kofferbauelemente (10) werden in einem Umformvorgang durch Verschwenken um eine zwischen dem jeweiligen Seitenwandabschnitt (12,14) und dem Dachabschnitt (13) ausgebildete Schwenkachse (S1,S2) in eine in Bezug auf den Dachabschnitt (13) fertige Relativposition gebracht.
c) Die Kofferbauelemente (10) werden zusammengesetzt.
d) Der aus den Kofferbauelementen (10) zusammengesetzte Kofferaufbau (3) wird im Ganzen auf die Bodenstruktur aufgesetzt und mit dieser fest verbunden.

23. Verfahren nach Anspruch 22, **dadurch gekennzeichnet, dass** der Arbeitsschritt c) vor dem Arbeitsschritt b) durchgeführt wird.

24. Verfahren nach Anspruch 22, **dadurch gekennzeichnet, dass** der Arbeitsschritt b) vor dem Arbeitsschritt c) durchgeführt wird.

25. Verfahren nach einem der Ansprüche 22 - 24,
**dadurch gekennzeichnet, dass**
die Kofferbauelemente (10) aus einem thermoplastisch verformbaren Werkstoff bestehen.

26. Verfahren nach Anspruch 25, **dadurch gekennzeichnet, dass** vor dem Verschwenken der Seitenwandabschnitte (12,14) ein zwischen dem jeweiligen Seitenwandabschnitt (12,14) und dem Dachabschnitt (13) vorhandener Übergangsabschnitt (U1,U2) auf eine Umformungstemperatur erwärmt wird, bei der dieser Übergangsabschnitt (U1,U2) plastisch verformbar ist, **dass** anschließend der jeweilige Seitenwandabschnitt (12,14) in seine fertige Relativposition zum Dachabschnitt (13) verschwenkt wird und **dass** der Übergangsabschnitt (U1,U2) anschließend auf eine Temperatur abgekühlt wird, bei der er fest ist, so dass der Seitenwandabschnitt (12,14) seine nach dem Verschwenken erreichte Relativposition zum Dachabschnitt (13) beibehält.

27. Verfahren nach einem der Ansprüche 22 bis 26,
**dadurch gekennzeichnet, dass** zwischen den Seitenabschnitten (12,14) und dem Dachabschnitt (13) jeweils ein Scharnier ausgebildet wird, um dessen Schwenkachse (S1,S2) der jeweilige Seitenwandabschnitt (12,14) in seine fertige Relativposition zum Dachabschnitt (13) verschwenkt wird.
